# EUROPÄISCHE PATENTSCHRIFT

(11) **EP 3 597 355 B1**
(45) Veröffentlichungstag und Bekanntmachung des Hinweises auf die Patenterteilung: **22.12.2021**
(21) Anmeldenummer: 19183865.5
(22) Anmeldetag: 02.07.2019
(51) Int. Cl.: B23K 26/70

(54) **LASERSCHUTZVORRICHTUNG ZUR ABSCHIRMUNG MINDESTENS EINER LASERLICHTQUELLE MIT FLÄCHIG AUSGEBILDETEN, FLEXIBLEN VERKLEIDUNGSTEILEN**
LASER PROTECTION DEVICE FOR SCREENING AT LEAST ONE LASER LIGHT SOURCE WITH FLAT, FLEXIBLE LINING ELEMENTS
DISPOSITIF DE PROTECTION CONTRE UN RAYONNEMENT LASER DESTINÉ AU BLINDAGE D'AU MOINS UNE SOURCE LUMINEUSE LASER POURVU D'ÉLÉMENTS DE REVÊTEMENT SOUPLES RÉALISÉS SOUS UNE FORME PLANE

(30) Priorität: 17.07.2018 DE 202018104113 U
(43) Veröffentlichungstag der Anmeldung: 22.01.2020
(73) Patentinhaber: JUTEC Hitzeschutz und Isoliertechnik GmbH, 26180 Rastede (DE)
(72) Erfinder: JUNG, Stefan, 26125 Oldenburg (DE)
(74) Vertreter: Jabbusch, Matthias

(56) Entgegenhaltungen:
- DE-U1-202017 100 227
- FR-E- 36 683
- US-A- 5 269 106
- US-B1- 7 219 681

## Beschreibung

Die Erfindung betrifft eine Laserschutzvorrichtung zur Abschirmung mindestens einer Laserlichtquelle mit flächig ausgebildeten, flexiblen Verkleidungsteilen, wobei die Verkleidungsteile wenigstens abschnittsweise aus laserlichtundurchlässigem Material bestehen und die Verkleidungsteile wenigstens abschnittsweise einen Raum umschließen, und mit wenigstens einem wenigstens ein Verkleidungsteil haltenden Gestell.

Laserschutzvorrichtungen der eingangs genannten Art sind bekannt und werden beispielsweise an Laserarbeitsplätzen, wie beispielsweise in der Automobilindustrie, der Schiffbauindustrie oder der Flugzeugindustrie eingesetzt. Der Schutz von Bedienpersonal ist bei Laserarbeitsplätzen ebenso wie der Schutz von Personen, die sich außerhalb des Laserarbeitsplatzes befinden, von besonderer Wichtigkeit. Beispielsweise können Laserstrahlen an Gegenständen reflektiert werden und so in alle möglichen Richtungen diffus abgestrahlt werden. Durch diese diffuse Reflektion, insbesondere durch Streustrahlung, ist eine erhebliche Gefahr für sich in der Nähe befindliche Personen gegeben. Ein Schutz vor der reflektierten Laserstrahlung ist somit, insbesondere bei Laserarbeitsplätzen in größeren Hallen oder ähnlichen Räumlichkeiten, unbedingt erforderlich. Als Laserschutzvorrichtungen werden beispielsweise Einhausungen aus starren Wänden, die eine Laserlicht erzeugende Quelle umgeben, eingesetzt.

Einen einfacheren Transport und flexibleren Einsatz mit der Möglichkeit einer individuellen Anpassung an einen jeweiligen Einsatzort und an lokale Gegebenheiten ermöglichen Laserschutzvorrichtungen mit flexiblen Wänden, die einfach vor Ort zusammenbaubar sind. Die DE 20 2017 100 227 U1 offenbart eine solche Laserschutzvorrichtung zur Abschirmung mindestens einer Laserlichtquelle. In der DE 20 2017 100 227 U1 ist dabei wesentlich, dass Wandelemente einen abzuschirmenden Raum in vier seitliche Richtungen umgeben und an einem verfahrbaren Gestell gehalten sind. In weiterer Ausgestaltung ist dann ausgeführt, wie einerseits die Wandelemente an mindestens vier Eckpfosten befestigt sind und in Kombination mit einer faltbaren Ausführung der Wandelemente und diversen Streben ein Zusammenfalten und Verfahren der Laserschutzvorrichtung sichergestellt ist.

Um eine vollständige Einhausung mit flexiblen Verkleidungsteilen zu erreichen, muss auch eine Decke der Laserschutzvorrichtung aus flexiblem Material sein, wenn die Laserschutzvorrichtung die sich aus den flexiblen Verkleidungsteilen ergebenden Vorteile aufweisen soll. Solch eine Decke aus wenigstens einem flexiblen, planenartigen Verkleidungsteil weist jedoch nur eine geringe Stabilität auf und hängt zumeist durch und ist umständlich zu montieren.

Aufgabe der Erfindung ist es daher eine Laserschutzeinrichtung mit einer Decke aus einem flexiblen Verkleidungsteil dahingehend weiterzuentwickeln, dass einerseits ein einfacher Aufbau gegeben ist und andererseits ein Durchhängen der flexiblen Verkleidungsteile der aufgebauten Laserschutzvorrichtung vermieden ist.

Die Lösung dieser Aufgabe erfolgt mit einer Laserschutzvorrichtung mit den Merkmalen des Schutzanspruchs 1. Vorteilhafte Ausgestaltungen und Weiterbildungen der Erfindung sind in den jeweils nachgeordneten Schutzansprüchen angegeben.

Die Laserschutzvorrichtung zur Abschirmung mindestens einer Laserlichtquelle mit flächig ausgebildeten, flexiblen Verkleidungsteilen, wobei die Verkleidungsteile wenigstens abschnittsweise aus laserlichtundurchlässigem Material bestehen und die Verkleidungsteile wenigstens abschnittsweise einen Raum umschließen, und mit wenigstens einem wenigstens ein Verkleidungsteil haltenden Gestell, zeichnet sich erfindungsgemäß dadurch aus, dass wenigstens ein Verkleidungsteil einen Deckenabschnitt der Laserschutzvorrichtung ausbildet, dass dem den Dachabschnitt ausbildenden Verkleidungsteil wenigstens eine Spannvorrichtung zugeordnet ist, dass die Spannvorrichtung wenigstens ein Spannmittel aufweist, das an dem Gestell angreift und zu dem Gestell abspannbar ist, dass die Spannvorrichtung als Spannmittel wenigstens eine Schiene aufweist, an der das den Deckenabschnitt ausbildende Verkleidungsteil mit einem seiner Seitenränder befestigt ist, dass die Schiene wenigstens zweiteilig ausgebildet ist, wobei ein erster Teil der Schiene mit dem Gestell verbunden ist und an einem zweiten Teil der Schiene die Längsseite des den Deckenabschnitt ausbildenden Verkleidungsteils befestigt ist, wobei der zweite Teil der Schiene zu dem ersten Teil der Schiene klappbar ist, und dass das den Deckenabschnitt ausbildende Verkleidungsteil an wenigstens einer seiner Seitenränder einen Keder aufweist, mit dem das Verkleidungsteil in eine Kederführung der Schiene eingezogen ist.

Mit der Spannvorrichtung und dem Spannmittel kann das den Deckenabschnitt bildende Verkleidungsteil auf einfache Weise aufgespannt werden, wodurch unterhalb des den Deckenabschnitt bildenden Verkleidungsteils ein optimierter Raum geschaffen ist. Eine Decke der Laserschutzvorrichtung kann dabei aus einem einzigen, aufgespannten Verkleidungsteil bestehen oder aus mehreren jeweils einen Deckenabschnitt bildenden Verkleidungsteilen zusammengesetzt sein.

Die zur Abschirmung einer Laserlichtquelle verwendeten flexiblen Verkleidungsteile können beispielsweise aus einem textilen Material, einem Planenstoff, einem Kunststoff oder einem ähnlichen flexiblen Material bestehen. Das Material oder die Materialien, aus denen die Verkleidungsteile bestehen, ist hierbei laserlichtundurchlässig. Insbesondere weisen die Verkleidungsteile eine Undurchlässigkeit für die Wellenlängenbereiche gebräuchlicher Laser auf. Bei dem Material kann es sich beispielsweise um PVC oder Polycarbonat oder einen ähnlichen laserlichtundurchlässigen Kunststoff handeln. Durch diese Materialien können die Wellenlängen des Laserlichtes nicht durchdringen, wohl aber andere Wellenlängen des sichtbaren Lichtes.

Die Befestigung von einem der Seitenränder des Verkleidungsteils an der Schiene stellt dabei sicher, dass das Verkleidungsteil beim Abspannen über die gesamte Länge der Schiene, insbesondere über die gesamte Länge des Seitenrands, straff gespannt werden kann. Der Seitenrand des Verkleidungsteils und die Schiene können dabei weiterhin parallel zu horizontalen Querstreben eines Rahmens des die jeweilige Seitenwand der Laservorrichtung bildenden Gestells angeordnet sein.

Zum Abspannen ist die Schiene dabei zu dem Gestell verschwenkbar oder verschiebbar an dem Gestell gehalten sein. Eine verschiebbare Schiene ist dann bevorzugt höhenverstellbar, wobei ein Verschieben der Schiene in Richtung Untergrund der Laserschutzvorrichtung zu einem Straffen des den Deckenabschnitt bildenden Verkleidungsteils führt. Eine Befestigung der verschiebbaren Schiene an dem Gestell, insbesondere an dem die Seitenwand der Laserschutzvorrichtung bildenden Rahmen des Gestells, kann bevorzugt über ein an dem Rahmen bzw. an dem Gestell vorgesehenes Raster erfolgen, in das die Schiene einhakt.

Die schwenkbare Schiene ist mehrteilig ausgebildet, insbesondere zweiteilig ausgebildet, wobei ein erster Teil der Schiene mit dem Gestell verbunden ist und an einem zweiten Teil der Schiene der Seitenrand des den Deckenabschnitt ausbildenden Verkleidungsteils befestigt ist, wobei der zweite Teil der Schiene zu dem ersten Teil der Schiene klappbar ist. Der erste Teil der Schiene kann dabei auch nur aus wenigstens zwei Scharnierhälften bestehen, an denen der zweite Teil der Schiene schwenkbeweglich angeschlagen ist, so dass der zweite Teil der Schiene jeweils die zweite Scharnierhälfte bildet. In wenigstens eine Endstellung können die beiden Teile der Schiene in weiterer Ausgestaltung zudem zueinander fixierbar sein, insbesondere über Schnellspanner zueinander fixierbar sein.

Das den Deckenabschnitt ausbildende Verkleidungsteil wird dabei vorteilhafterweise gespannt, indem der zweite Teil der Schiene um den ersten Teil der Schiene verschwenkt wird. Insbesondere wird der zweite Teil derart verschwenkt, dass eine Seite der Schiene oder ein Bereich der Schiene, an der oder an dem das Verkleidungsteil an den zweiten Teil der Schiene ansetzt, nach außen gedreht wird. Das Verkleidungsteil wird dabei mit dem Seitenrand von einem mittigen Bereich der Laserschutzvorrichtung nach außen von der Laserschutzvorrichtung weg straff gezogen und wenigstens abschnittsweise an die Schiene angelegt, insbesondere wenigstens abschnittsweise um die Schiene gewickelt.

Um die Schiene und das Verkleidungsteil, insbesondere den Seitenrand des Verkleidungsteils, miteinander zu verbinden, weist das den Deckenabschnitt ausbildende Verkleidungsteil an wenigstens einem seiner Seitenränder einen Keder auf, mit dem das Verkleidungsteil in eine Kederführung der Schiene einziehbar ist, insbesondere eingezogen ist. Bei den Kedern kann es sich beispielsweise um wulstartige Randverstärkungen der aus flexiblem textilem Flächengebilde bestehenden Verkleidungsteile handeln. In weiterer Ausgestaltung erstreckt sich die Kederführung über die gesamte Länge der Schiene und der Keder über den gesamten Seitenrand des Verkleidungsteils. Mittels Keder und Kederführung besteht somit über die gesamte Länge des Seitenrands und der Schiene eine durchgehende Verbindung.

Nach einer besonders vorteilhaften Ausführung kann das den Deckenabschnitt ausbildende Verkleidungsteil an wenigstens zwei einander gegenüberliegenden Seitenrändern jeweils einen Keder aufweisen, mit denen das Verkleidungsteil jeweils in eine Kederführung einer Schiene eingezogen ist. In Kombination mit wenigstens einer verschwenkbaren oder verschiebbaren Schiene kann das den Deckenabschnitt ausbildende Verkleidungsteil so über die beiden Seitenränder mit den Kedern gespannt werden. Hierfür ist es ausreichend, wenn eine der Schienen verschwenkbar oder verschiebbar ist und die andere Schiene in einer vorbestimmten Position fest mit dem Gestell verbunden ist.

Alternativ zu einem Keder an dem Seitenrand des Verkleidungsteils und einer Kederführung an der Schiene können der Schiene und dem Seitenrand des den Deckenabschnitt ausbildenden Verkleidungsteils Einhakmittel zugeordnet sein. Derartige Einhakmittel können zum Beispiel eine Kombination aus Karabinern und Ösen sein, über die Schiene und Verkleidungsteil miteinander verbunden sind. Neben den beiden beschriebenen Ausführungen mit Keder oder Einhakmitteln können Schiene und Verkleidungsteil auch anderweitig miteinander verbunden werden, beispielsweise zusammengeknöpft sein.

Weiterhin können die verschiedenen Ausführungen von Schiene und Verbindungsmitteln auch beliebig miteinander kombiniert werden.

Eine alternative oder ergänzende Spannvorrichtung einer zweiten Ausführung der Erfindung kann als Spannmittel wenigstens einen Zugstrang aufweisen. Mit wenigstens einem Zugstrang, der anstatt oder zusätzlich vorgesehen ist, lassen sich auch größere Spannweiten größerer Decken von Laserschutzvorrichtungen abspannen, ohne dass diese durchhängen. Der Zugstrang ersetzt oder ergänzt damit die Schiene und zieht das den Deckenabschnitt ausbildende Verkleidungsteil in seine bestimmungsgemäße Position, insbesondere eine plane, horizontal ausgerichtete Ebene, in welcher eine Decke der Laserschutzvorrichtung angeordnet sein soll.

Dazu kann an dem den Deckenabschnitt ausbildenden Verkleidungsteil wenigstens eine Zugstrangführung ausgebildet sein. Jedem Zugstrang ist dann bevorzugt eine Zugstrangführung zugeordnet, in der der Zugstrang geführt ist. Der in der Zugstrangführung geführte Zugstrang weist so einen vorgegebenen Zugweg auf, durch den sichergestellt ist, dass das den Deckenabschnitt ausbildende Verkleidungsteil in vorbestimmter Weise aufgespannt und errichtet wird. Als Zugstrangführung eignen sich verschiedene von Zeltkonstruktionen bekannte Schlaufen, Bänder, Tunnel oder dergleichen.

Gemäß einer ersten Ausführung des als Zugstrang ausgebildeten Spannmittels sind einem Verkleidungsteil zwei diagonal zueinander verlaufende Zugstränge zugeordnet. Diese diagonale Anordnung der Zugstränge gewährleistet eine möglichst gleichmäßige Kräfteverteilung über die gesamte Decke der Laserschutzvorrichtung bzw. das gesamte als Deckenabschnitt ausgebildete Verkleidungsteil, wodurch durch Zugbeanspruchung verursachte Beschädigungen des Verkleidungsteils vermieden sind. Die Enden der diagonal zueinander angeordneten Zugstränge sind dann bevorzugt an jeweils einem Pfosten des Gestells gehalten. An den Pfosten des Gestells können hierzu entsprechende Befestigungsmittel vorgesehen sein. In weiterer Ausgestaltung stellen die Pfosten gleichzeitig Eckpfosten des Gestells der Laserschutzvorrichtung dar, die eine Seitenwand des Gestells begrenzen.

Gemäß einer zweiten Ausführung des als Zugstrang ausgebildeten Spannmittels ist der Zugstrang parallel zu einer Seitenwand der Laserschutzvorrichtung oder einem der Seitenränder des den Deckenabschnitt ausbildenden Verkleidungsteils angeordnet. Diese Anordnung des Zugstrangs ist besonders vorteilhaft, wenn das Verkleidungsteil ähnlich wie mit einer Schiene als Spannmittel in eine Richtung abgespannt werden soll oder um das Verkleidungsteil nur in einem Teilbereich zu spannen, indem der Zugstrang außermittig angeordnet wird.

Um Kräfte und Zug auf das Verkleidungsteil möglichst gleichmäßig verteilen zu können, können auch mehrere Zugstränge parallel zueinander angeordnet werden. Weiterhin können auch wenigstens zwei Zugstränge über Kreuz angeordnet werden, wobei die Zugstränge dann zu verschiedenen Seitenwänden parallel angeordnet sind. Die geeignete Anzahl an Zugsträngen und Abständen der Zugstränge zueinander ergibt sich aus den Abmessungen des den Deckenabschnitt ausbildenden Verkleidungsteils und kann variieren.

Der parallel zu einem Seitenrand des Verkleidungsteils oder einer Seitenwand der Laserschutzvorrichtung verlaufende Zugstrang kann in weiterer Ausgestaltung an einer Querstrebe des Gestells angreifen, um das den Deckenabschnitt ausbildende Verkleidungsteil in gewünschter Weise zu spannen. Die Querstrebe kann weiterhin wie die vorgenannten Schienen an einem eine Seitenwand ausbildenden Rahmen des Gestells befestigt sein oder Teil des Rahmens sein, insbesondere ist die Querstrebe auch in einer horizontalen Ebene angeordnet.

Um den Zugstrang zu spannen und ausreichend Zugkraft aufbringen zu können, kann nach einer Weiterbildung wenigstens eine Kurbel oder wenigstens ein Spannschloss mit wenigstens einer Ratsche vorgesehen sein.

Eine einfachere Errichtung der Laserschutzvorrichtung kann dadurch erreicht sein, dass das Gestell eine Hilfsablageeinrichtung für das den Deckenabschnitt bildende Verkleidungsteil aufweist. Die Hilfsablageeinrichtung ist vorteilhafterweise in Höhe der Decke an dem Gestell angeordnet, insbesondere an einer Seitenwand des Gestells angeordnet, insbesondere an einem eine Seitenwand ausbildenden Rahmen des Gestells angeordnet. Beim Errichten der Laserschutzvorrichtung kann das Verkleidungsteil dann nacheinander mit einer Hebeeinrichtung angehoben, auf der Hilfsablageeinrichtung abgelegt und anschließend in der Ebene der Decke der Laserschutzvorrichtung aufgespannt werden.

Vorteilhafterweise ist die Hilfsablageeinrichtung für das den Deckenabschnitt bildende Verkleidungsteil an einer Querstrebe, insbesondere einer obersten Querstrebe, des Gestells gehalten. Auf einfache Weise besteht die Hilfsablageeinrichtung aus mehreren über die gesamte Länge der Querstrebe verteilte Aufnahmebügel, deren äußere Enden nach oben gebogen sind. Die nach oben gebogenen Enden verhindern dabei ein Abrutschen des planenartigen Verkleidungsteils von der Hilfsablageeinrichtung. Beim Montieren der Decke wird das Verkleidungsteil jetzt auf die der Hilfsablageeinrichtung gegenüberliegende Seite der Laserschutzvorrichtung gezogen und mit einem der vorgenannten Spannmittel straff gezogen.

Zwischen den Pfosten sind Seitenwände des Gestells aufgenommen, wobei das Gestell beispielsweise pavillonartig ausgebildet ist. Die Pfosten können dabei teleskopartig ausgeführt sein, so dass eine Höhenanpassung an die jeweiligen räumlichen Gegebenheiten ermöglicht ist. Neben Eckpfosten kann das Gestell auch Seitenpfosten aufweisen, die beispielsweise an Längsseiten oder Querseiten des Gestelles zwischen zwei Eckpfosten parallel zu diesen angeordnet sein können. Durch die Seitenpfosten kann eine zusätzliche Stabilität des Gestelles gegeben sein. Die Seitenpfosten können nachträglich, beispielsweise in einer dafür vorgesehenen Aufnahme, montierbar sein.

Eine Seitenwand ist nach einer Weiterbildung der Erfindung durch wenigstens ein Verkleidungsteil planenartig ausgebildet und an den Pfosten befestigt.

Die Pfosten können dabei zusammen mit Querstreben einen Rahmen der Seitenwand bilden, in dem das wenigstens eine Verkleidungsteil aufgenommen ist. Das Gestell zur Halterung der flexiblen Verkleidungsteile kann aus einzelnen Rahmenelementen aufgebaut sein. Beispielsweise können die Rahmenelemente aus Aluminiumprofilabschnitten aufgebaut sein. Durch die Verwendung von Aluminiumprofilabschnitten ist eine einfache Möglichkeit gegeben die Rahmenelemente modular aufzubauen. Die Rahmenelemente weisen jeweils mindestens zwei, insbesondere genau zwei Pfosten und mindestens zwei Querstreben, insbesondere genau zwei Querstreben auf. Zudem kann durch die Wahl unterschiedlich langer Aluminiumprofilabschnitte die Größe der Rahmenelemente leicht an die gewünschten Gegebenheiten angepasst werden. Im aufgebauten Zustand sind die Pfosten vorzugsweise senkrecht zur Aufstellfläche des Gestells angeordnet. Die Pfosten weisen jeweils an ihren Enden eine Verbindung zu den Querstreben auf, so dass ein Rahmenelement gebildet ist. Auf die Rahmenelemente können die flexiblen Verkleidungsteile einfach aufgespannt werden.

Um einen Austritt von Laserstrahlung an den Übergängen zwischen Wand und Decke zu verhindern, ist weiterhin vorgesehen, dass das den Deckenabschnitt ausbildende Verkleidungsteil wenigstens ein an dem Gestell gehaltenes, eine Seitenwand ausbildendes Verkleidungsteil überlappt. Eine solche Überlappung kann zu allen Seiten der Laserschutzvorrichtung, insbesondere zu allen Seiten des Deckenabschnitts der Laserschutzvorrichtung, vorgesehen sein. Zudem können auch mehrere eine Decke bildende Verkleidungsteile in benachbarten Randbereichen überlappend angeordnet sein.

An den Seitenwänden der Laserschutzvorrichtung in deren Richtung nicht abgespannt wird, wird das den Deckenabschnitt bildende Verkleidungsteil vorteilhafterweise mit Karabinern, Druckknöpfen, Klettstreifen oder ähnlichen, geeigneten Verbindungs- und Befestigungsmitteln an dem Gestell oder an wenigstens einem eine Seitenwand bildenden Verkleidungsteil befestigt, um auch an diesen Seitenwänden einen strahlungsdichten Übergang von Decke zu Wand der Laserschutzvorrichtung zu gewährleisten.

Neben einer planen, in einer horizontalen Ebene aufgespannten Decke kann die Laserschutzvorrichtung auch eine Decke mit anderer Form aufweisen. Hierzu kann das Gestell wenigstens eine Deckenunterkonstruktion aufweisen, über die das den Deckenabschnitt bildende Verkleidungsteil gezogen wird. Als Beispiel sei eine gewölbte Decke genannt. Das die Decke bildende Verkleidungsteil kann des Weiteren mit einem Überdach überspannt werden. Dieses Überdach kann beispielsweise dem Staubschutz oder auch dem Schutz vor anderweitigen Verunreinigungen dienen.

Nebeneinander angeordnete Rahmenelemente können mit Schnellspannverschlüssen miteinander verbunden sein. Zur Ausbildung einer Seitenwand können beliebig viele Rahmenelemente nebeneinander angeordnet sein. Hierbei können die Rahmenelemente auch unterschiedliche Rahmengrößen aufweisen. Die Decke der Laserschutzvorrichtung kann dabei entsprechend den Rahmengrößen Spannvorrichtungen aufweisen, so dass einem Rahmenelement an einer Seite der Laserschutzvorrichtung eine Spannvorrichtung zugeordnet ist. Bei den Schnellspannverschlüssen der Seitenwände und der Decke kann es sich insbesondere um Hebelspannverschlüsse handeln. Wobei ein erster Pfosten eines Rahmenelementes einen Haken aufweist und ein zweiter Pfosten des Rahmenelementes den korrespondierenden Hebel aufweist.

Ausführungsbeispiele der Erfindung, aus denen sich weitere erfindungswesentliche Merkmale ergeben können, sind in den Figuren der Zeichnung dargestellt. Es zeigen:
- Figur 1:: einen Querschnitt durch einen Teil einer erfindungsgemäßen Laserschutzvorrichtung mit geöffneter Schiene;
- Figur 2:: den Querschnitt gemäß Figur 1 mit geschlossener Schiene;
- Figur 3:: eine perspektivische Darstellung einer ersten Ausführung der erfindungsgemäßen Laserschutzvorrichtung; und
- Figur 4:: eine perspektivische Darstellung einer zweiten Ausführung der erfindungsgemäßen Laserschutzvorrichtung.

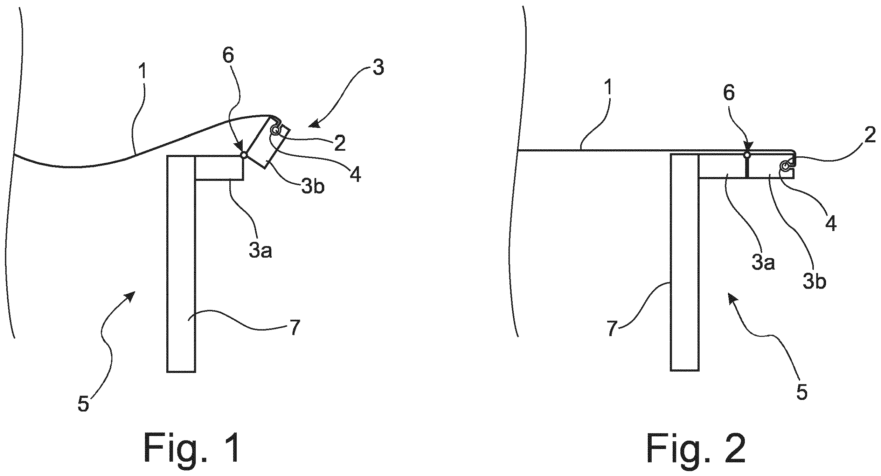

In Figur 1 und Figur 2 ist gezeigt, wie ein einen Deckenabschnitt ausbildendes Verkleidungsteil 1 mit einem Keder 2 und einer Schiene 3 mit einer Kederführung 4 an einem Gestell 5 aufgespannt wird. Die Schiene 3 ist dabei aus zwei mit einem Scharnier 6 miteinander verbundenen Teilen 3a, 3b zusammengesetzt und bildet ein Spannmittel einer Spannvorrichtung des Verkleidungsteils 1. Ein erster Teil 3a der Schiene 3 ist fest mit einer Seitenwand 7 des Gestells 5 verbunden und ein zweiter Teil 3b der Schiene 3 ist über das Scharnier 6 zu dem Gestell 5 beweglich an dem Gestell 5 gehalten. Der zweite Teil 3b der Schiene 3 weist die Kederführung 4 auf, in welcher der Keder 2 des Verkleidungsteils 1 eingezogen ist.

Während Figur 1 die Schiene 3 in einer geöffneten Stellung der Teile 3a, 3b zeigt, wobei das Verkleidungsteil 1 noch nicht gespannt ist, sind die beiden Teile 3a, 3b in Figur 2 in einer Schließposition zueinander angeordnet und mit einem nicht dargestellten Schnellspanner der Schiene 3 in der Schließposition gesichert. Der zweite Teil 3b der Schiene 3 ist dabei ausgehend von Figur 1 im Uhrzeigersinn um den ersten Teil 3a der Schiene 3 verschwenkt worden, so dass das Verkleidungsteil 1 nach außen in Richtung der Seitenwand 7 gezogen worden ist und in der Schließposition der Schiene 3 aufgespannt ist.

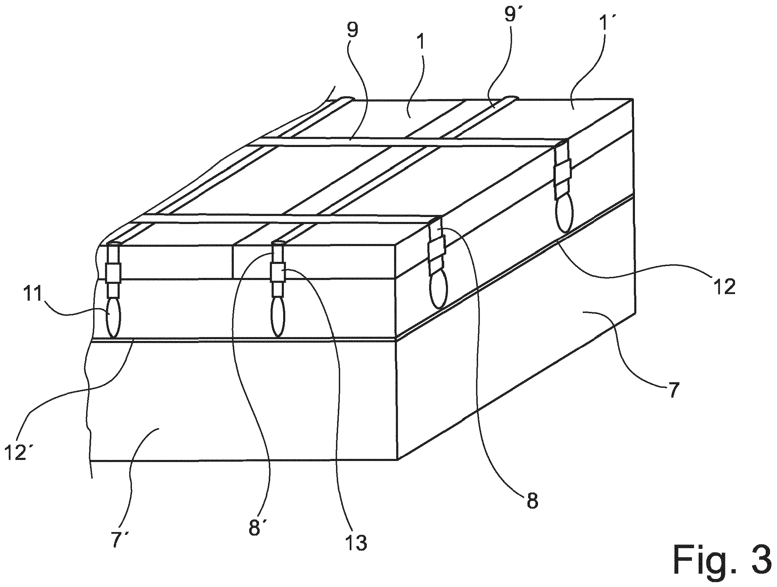

Figur 3 zeigt eine alternative oder ergänzende Spannvorrichtung zu der Spannvorrichtung in Figur 1 und Figur 2. Gleiche Teile sind dabei wie in den übrigen Figuren mit gleichen Bezugszeichen versehen. Als Spannmittel weist die Spannvorrichtung in Figur 3 Zugstränge 8, 8′ auf, die parallel zu jeweils einer Seitenwand 7 verlaufend angeordnet sind und mehrere jeweils einen Deckenabschnitt ausbildende Verkleidungsteile 1, 1′ überspannen. Die Verkleidungsteile 1, 1′ weisen jeweils an ihrer Außenseite eine Zugstrangführung 9, 9′ auf, durch die die Zugstränge 8, 8' hindurchgeführt sind. Die Zugstränge 8, 8′ sind mit ihren Enden 10 an Seitenwänden 7, 7′ des Gestells 5 befestigt und mit einem Spannschloss 11 straff gezogen. An den Seitenwänden 7, 7′ sind die Zugstränge 8, 8′ mittels Karabinern 12 an Querstreben 12, 12′ eingehängt. Die Zugstränge 8 und Zugstrangführungen 9 sind jeweils überkreuz im rechten Winkel zu den Zugsträngen 8′ und den Zugstrangführungen 9′ angeordnet, so dass die Zugstränge 8 nicht wie die Zugstränge 8′ an der Seitenwand 7′ sondern an der Seitenwand 7 angreifen.

Die nebeneinander in Bahnen angeordneten Verkleidungsteile 1, 1′ überlappen sich dabei in Randbereichen gegenseitig und überlappen die an das jeweilige, einen Deckenabschnitt ausbildende Verkleidungsteil 1, 1′ anschließende Seitenwand 7, 7′.

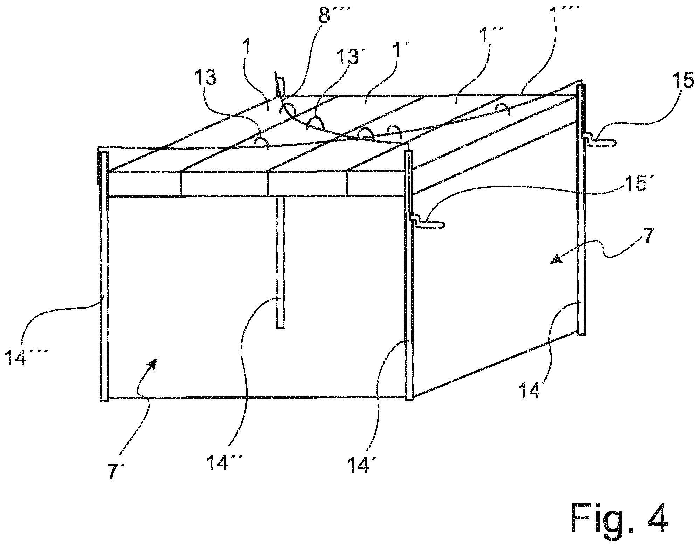

In Figur 4 ist eine alternative Abspannung einer Decke einer Laserschutzvorrichtung aus Verkleidungsteilen 1, 1′, 1ʺ, 1‴ mit Zugsträngen 8ʺ, 8‴ dargestellt. Die Zugstränge 8ʺ, 8‴ sind dabei diagonal zueinander verlaufend angeordnet und an Pfosten 12, 12′, 12ʺ, 12‴, die die Seitenwände 7, 7′ begrenzen, befestigt. Als Zugstrangführung sind an den Außenseiten der Verkleidungsteile 1, 1′, 1ʺ, 1‴ mehrere Schlaufen 13 angeordnet, durch die die Zugstränge 8ʺ, 8‴ hindurchgeführt sind. Zum Spannen der Decke der Laserschutzvorrichtung aus den Verkleidungsteilen 1, 1', 1", 1'" mit den Zugsträngen 8", 8'" ist jedem der Zugstränge 8", 8'" eine Kurbel 14, 14' zugeordnet. Die Kurbeln 14, 14' sind jeweils an einem Pfosten 12, 12' angeordnet und ermöglichen ein Aufwickeln der Zugstränge 8", 8'".

### Bezuqszahlenliste:

- 1, 1', 1": Verkleidungsteil
- 2: Keder
- 3: Schiene
- 3a, 3b: Teile von 3
- 4: Kederführung
- 5: Gestell
- 6: Scharnier
- 7: Seitenwand
- 8: Zugstrang
- 9, 9', 9": Zugstrangführung
- 10: Ende von 8
- 11: Karabinerhaken
- 12: Querstreben
- 13: Spannschloss
- 14, 14', 14", 14'": Pfosten
- 15,15': Kurbel

## Patentansprüche

1. Laserschutzvorrichtung zur Abschirmung mindestens einer Laserlichtquelle mit flächig ausgebildeten, flexiblen Verkleidungsteilen (1, 1′, 1ʺ, 1‴), wobei die Verkleidungsteile (1, 1′, 1ʺ, 1‴) wenigstens abschnittsweise aus laserlichtundurchlässigem Material bestehen und die Verkleidungsteile (1, 1′, 1ʺ, 1‴) wenigstens abschnittsweise einen Raum umschließen, und mit wenigstens einem wenigstens ein Verkleidungsteil (1, 1′, 1ʺ, 1‴) haltenden Gestell (5),
**dadurch gekennzeichnet,**
**dass** wenigstens ein Verkleidungsteil (1, 1′, 1ʺ, 1‴) einen Deckenabschnitt der Laserschutzvorrichtung ausbildet,
**dass** dem den Deckenabschnitt ausbildenden Verkleidungsteil (1, 1′, 1ʺ, 1‴) wenigstens eine Spannvorrichtung zugeordnet ist,
**dass** die Spannvorrichtung wenigstens ein Spannmittel aufweist, das an dem Gestell (5) angreift und zu dem Gestell (5) abspannbar ist,
**dass** die Spannvorrichtung als Spannmittel wenigstens eine Schiene (3) aufweist, an der das den Deckenabschnitt ausbildende Verkleidungsteil (1, 1′, 1ʺ, 1‴) mit einem seiner Seitenränder befestigt ist,
**dass** die Schiene (3) wenigstens zweiteilig ausgebildet ist, wobei ein erster Teil (3a) der Schiene (3) mit dem Gestell (5) verbunden ist und an einem zweiten Teil (3b) der Schiene (3) die Längsseite des den Deckenabschnitt ausbildenden Verkleidungsteils (1, 1′, 1ʺ, 1‴) befestigt ist, wobei der zweite Teil (3b) der Schiene (3) zu dem ersten Teil (3a) der Schiene (3) klappbar ist, und
**dass** das den Deckenabschnitt ausbildende Verkleidungsteil (1, 1′, 1ʺ, 1‴) an wenigstens einer seiner Seitenränder einen Keder (2) aufweist, mit dem das Verkleidungsteil (1, 1', 1", 1"') in eine Kederführung (4) der Schiene (3) eingezogen ist.

2. Laserschutzvorrichtung nach Anspruch 1, **dadurch gekennzeichnet, dass** die Schiene (3) zu dem Gestell (5) verschwenkbar oder verschiebbar an dem Gestell (5) gehalten ist.

3. Laserschutzvorrichtung nach einem der Ansprüche 1 oder 2, **dadurch gekennzeichnet, dass** die Schiene (3) höhenverstellbar an dem Gestell (5) befestigt ist.

4. Laserschutzvorrichtung nach einem der Ansprüche 1 bis 3, **dadurch gekennzeichnet, dass** das den Deckenabschnitt ausbildende Verkleidungsteil (1, 1′, 1ʺ, 1‴) an wenigstens zwei einander gegenüberliegenden Seitenrändern jeweils einen Keder (2) aufweist, mit denen das Verkleidungsteil (1, 1′, 1ʺ, 1‴) jeweils in einer Kederführung (4) einer Schiene (3) eingezogen ist.

5. Laserschutzvorrichtung nach einem der Ansprüche 1 bis 4, **dadurch gekennzeichnet, dass** der Schiene (3) und dem Seitenrand des den Deckenabschnitt ausbildenden Verkleidungsteils (1, 1', 1", 1"') Einhakmittel zugeordnet sind.

6. Laserschutzvorrichtung nach einem der Ansprüche 1 bis 5, **dadurch gekennzeichnet, dass** die Spannvorrichtung als Spannmittel wenigstens einen Zugstrang (8, 8′, 8ʺ, 8‴) aufweist.

7. Laserschutzvorrichtung nach Anspruch 6, **dadurch gekennzeichnet, dass** an dem den Deckenabschnitt ausbildenden Verkleidungsteil (1, 1′, 1ʺ, 1‴) wenigstens eine Zugstrangführung (9, 9') ausgebildet ist.

8. Laserschutzvorrichtung nach einem der Ansprüche 1 oder 7, **dadurch gekennzeichnet, dass** einem Verkleidungsteil (1, 1′, 1ʺ, 1‴) zwei diagonal zueinander verlaufende Zugstränge (8", 8"') zugeordnet sind.

9. Laserschutzvorrichtung nach Anspruch 8, **dadurch gekennzeichnet, dass** die diagonal zueinander angeordneten Zugstränge (8", 8"') mit ihren Enden an jeweils einem Pfosten (14, 14′, 14ʺ, 14‴) des Gestells (5) gehalten sind.

10. Laserschutzvorrichtung nach einem der Ansprüche 6 bis 9, **dadurch gekennzeichnet, dass** der Zugstrang (8, 8') parallel zu einem der Seitenränder des den Deckenabschnitt ausbildenden Verkleidungsteils (1, 1′, 1ʺ, 1‴) angeordnet ist.

11. Laserschutzvorrichtung nach einem der Ansprüche 6 bis 10, **dadurch gekennzeichnet, dass** der Zugstrang (8, 8') an einer Querstrebe (12, 12') des Gestells (5) angreift.

12. Laserschutzvorrichtung nach einem der Ansprüche 6 bis 11, **dadurch gekennzeichnet, dass** der Zugstrang (8, 8', 8", 8'") mit wenigstens einer Kurbel (15, 15') oder mit wenigstens einem Spannschloss (13) und wenigstens einer Ratsche spannbar ist.

13. Laserschutzvorrichtung nach einem der Ansprüche 1 bis 12, **dadurch gekennzeichnet, dass** das Gestell (5) eine Hilfsablageeinrichtung für das den Deckenabschnitt bildende Verkleidungsteil (1, 1′, 1ʺ, 1‴) aufweist.

14. Laserschutzvorrichtung nach Anspruch 13, **dadurch gekennzeichnet, dass** die Hilfsablageeinrichtung für das den Deckenabschnitt bildende Verkleidungsteil (1, 1′, 1ʺ, 1‴) an einer Querstrebe des Gestells (5) gehalten ist.

15. Laserschutzvorrichtung nach einem der Ansprüche 1 bis 14, **dadurch gekennzeichnet, dass** das den Deckenabschnitt ausbildende Verkleidungsteil (1, 1′, 1ʺ, 1‴) wenigstens ein an dem Gestell (5) gehaltenes, eine Seitenwand (7, 7') ausbildendes Verkleidungsteil überlappt.

## Claims

1. Laser protection device for purposes of shielding at least one laser light source with flexible cladding parts (1, 1', 1", 1'") of flat design, wherein the cladding parts (1, 1', 1", 1'"), at least in sections, consist of laser light-impermeable material, and the cladding parts (1, 1′, 1ʺ, 1‴), at least in sections, enclose a space, and with at least one frame (5) holding at least one cladding part (1, 1', 1", 1'"),
**characterised in that**,
at least one cladding part (1, 1', 1", 1"') forms a cover section of the laser protection device,
**in that**, at least one tensioning device is associated with the cladding part (1, 1', 1", 1"') forming the cover section,
**in that**, the tensioning device has at least one tensioning means, which engages with the frame (5), and can be tensioned with respect to the frame (5),
**in that**, the tensioning device has, as tensioning means, at least one rail (3), to which the cladding part (1, 1', 1", 1"') forming the cover section is attached with one of its side edges,
**in that**, the rail (3) is designed at least in two parts, wherein a first part (3a) of the rail (3) is connected to the frame (5), and the longitudinal side of the cladding part (1, 1', 1", 1"') forming the cover section is attached to a second part (3b) of the rail (3), wherein the second part (3b) of the rail (3) can be folded towards the first part (3a) of the rail (3),
and **in that**, the cladding part (1, 1′, 1ʺ, 1‴) forming the cover section has, on at least one of its side edges, a piping section (2), with which the cladding part (1, 1′, 1ʺ, 1‴) is drawn into a piping section guide (4) of the rail (3) .

2. Laser protection device according to Claim 1, **characterised in that**, the rail (3) is held on the frame (5) such that it can be pivoted or displaced relative to the frame (5).

3. Laser protection device according to one of the Claims 1 or 2, **characterised in that**, the rail (3) is attached to the frame (5) in a height-adjustable manner.

4. Laser protection device according to one of the Claims 1 to 3, **characterised in that**, the cladding part (1, 1′, 1ʺ, 1‴) forming the cover section has a piping section (2) on each of at least two opposing side edges, with which the cladding part (1, 1′, 1ʺ, 1‴) is drawn into a piping section guide (4) of a rail (3).

5. Laser protection device according to one of the Claims 1 to 4, **characterised in that**, hooking means are assigned to the rail (3) and the side edge of the cladding part (1, 1′, 1ʺ, 1‴) forming the cover section.

6. Laser protection device according to one of the Claims 1 to 5, **characterised in that**, the tensioning device has, as tensioning means, at least one tensioning strap (8, 8′, 8ʺ, 8‴).

7. Laser protection device according to Claim 6, **characterised in that**, at least one tensioning strap guide (9, 9′) is formed on the cladding part (1, 1′, 1ʺ, 1‴) forming the cover section.

8. Laser protection device according to one of the Claims 1 or 7, **characterised in that**, two tensioning straps (8ʺ, 8‴) running diagonally relative to one another are assigned to a cladding part (1, 1′, 1ʺ, 1′′).

9. Laser protection device according to Claim 8, **characterised in that**, the tensioning straps (8ʺ, 8‴), arranged diagonally relative to one another, are each held by their ends on a post (14, 14′, 14ʺ, 14‴) of the frame (5).

10. Laser protection device according to one of the Claims 6 to 9, **characterised in that**, the tensioning strap (8, 8′) is arranged parallel to one of the side edges of the cladding part (1, 1′, 1ʺ, 1‴) forming the cover section.

11. Laser protection device according to one of the Claims 6 to 10, **characterised in that**, the tensioning strap (8, 8′) engages with a transverse strut (12, 12′) of the frame (5).

12. Laser protection device according to one of the Claims 6 to 11, **characterised in that**, the tensioning strap (8, 8′, 8ʺ, 8‴) can be tensioned with at least one crank arm (15, 15′), or with at least one turnbuckle (13) and at least one ratchet.

13. Laser protection device according to one of the Claims 1 to 12, **characterised in that**, the frame (5) has an ancillary storage unit for the cladding part (1, 1′, 1ʺ, 1‴) forming the cover section.

14. Laser protection device according to Claim 13, **characterised in that**, the ancillary storage unit for the cladding part (1, 1′, 1ʺ, 1‴) forming the cover section is held on a transverse strut of the frame (5).

15. Laser protection device according to one of the Claims 1 to 14, **characterised in that**, the cladding part (1, 1′, 1ʺ, 1‴) forming the cover section overlaps at least one cladding part held on the frame (5), and forming a side wall (7, 7′).

## Revendications

1. Dispositif de protection contre un rayonnement laser destiné au blindage d'au moins une source lumineuse laser pourvu d'éléments de revêtement (1, 1′, 1ʺ, 1‴) souples réalisés sous une forme plane, sachant que les éléments de revêtement (1, 1′, 1ʺ, 1‴) sont composés au moins par sections d'un matériau imperméable à la lumière laser et les éléments de revêtement (1, 1′, 1ʺ, 1‴) entourent au moins par sections un espace et avec au moins un châssis (5) maintenant au moins un élément de revêtement (1, 1′, 1ʺ, 1‴)
**caractérisé en ce qu'**
au moins un élément de revêtement (1, 1′, 1ʺ, 1‴) constitue une section de couverture du dispositif de protection contre un rayonnement laser,
**en ce qu'**au moins un système de serrage est attribué à l'élément de revêtement (1, 1′, 1ʺ, 1‴) formant la section de couverture,
**en ce que** le système de serrage comporte au moins un moyen de serrage, qui vient en prise sur le châssis (5) et peut être serré au châssis (5),
**en ce que** le système de serrage comporte au moins un rail (3) en tant que moyen de serrage sur lequel l'élément de revêtement (1, 1′, 1ʺ, 1‴) formant la section de couverture est fixé avec un de ses bords latéraux,
**en ce que** le rail (3) est constitué au moins en deux parties, sachant qu'une première partie (3a) du rail (3) est reliée au châssis (5) et que le côté longitudinal de l'élément de revêtement (1, 1′, 1ʺ, 1‴) formant la section de couverture est fixé à une deuxième partie (3b) du rail (3), sachant que la deuxième partie (3b) du rail (3) peut être rabattue sur la première partie (3a) du rail (3),
et **en ce que** l'élément de revêtement (1, 1′, 1ʺ, 1‴) formant la section de couverture comporte sur au moins un de ses bords latéraux un bourrelet (2) avec lequel l'élément de revêtement (1, 1′, 1ʺ, 1‴) est inséré dans un guidage de bourrelet (4) du rail (3).

2. Dispositif de protection contre un rayonnement laser selon la revendication 1, **caractérisé en ce que** le rail (3) est fixé au châssis (5) pouvant pivoter ou pouvant être déplacé sur le châssis (5).

3. Dispositif de protection contre un rayonnement laser selon l'une quelconque des revendications 1 ou 2, **caractérisé en ce que** le rail (3) est fixé réglable en hauteur sur le châssis (5).

4. Dispositif de protection contre un rayonnement laser selon l'une quelconque des revendications 1 à 3, **caractérisé en ce que** l'élément de revêtement (1, 1′, 1ʺ, 1‴) formant la section de couverture comporte respectivement un bourrelet (2) sur au moins deux bords latéraux opposés l'un à l'autre avec lesquels l'élément de revêtement (1, 1′, 1ʺ, 1‴) est respectivement inséré dans un guidage de bourrelet (4) d'un rail (3).

5. Dispositif de protection contre un rayonnement laser selon l'une quelconque des revendications 1 à 4, **caractérisé en ce que** des moyens d'accrochage sont attribués au rail (3) et au bord latéral de l'élément de revêtement (1, 1′, 1ʺ, 1‴) formant la section de couverture.

6. Dispositif de protection contre un rayonnement laser selon l'une quelconque des revendications 1 à 5, **caractérisé en ce que** le système de serrage comporte au moins un brin de traction (8, 8′, 8ʺ, 8‴) en tant que moyen de serrage.

7. Dispositif de protection contre un rayonnement laser selon la revendication 6, **caractérisé en ce qu'**au moins un guidage de brin de traction (9, 9′) est constitué sur l'élément de revêtement (1, 1′, 1ʺ, 1‴) formant la section de couverture.

8. Dispositif de protection contre un rayonnement laser selon l'une quelconque des revendications 1 ou 7, **caractérisé en ce que** deux brins de traction (8ʺ, 8‴) passant en diagonale l'un par rapport à l'autre, sont attribués à un élément de revêtement (1, 1′, 1ʺ, 1‴.

9. Dispositif de protection contre un rayonnement laser selon la revendication 8, **caractérisé en ce que** les brins de traction (8ʺ, 8‴) disposés en diagonale l'un par rapport à l'autre sont respectivement maintenus avec leurs extrémités sur un montant (14, 14′, 14ʺ, 14‴) du châssis (5).

10. Dispositif de protection contre un rayonnement laser selon l'une quelconque des revendications 6 à 9, **caractérisé en ce que** le brin de traction (8, 8′, 8ʺ, 8‴) est disposé parallèlement à un des bords latéraux de l'élément de revêtement (1, 1′, 1ʺ, 1‴) formant la section de couverture.

11. Dispositif de protection contre un rayonnement laser selon l'une quelconque des revendications 6 à 10, **caractérisé en ce que** le brin de traction (8, 8′) vient en prise sur une traverse (12, 12′) du châssis (5) .

12. Dispositif de protection contre un rayonnement laser selon l'une quelconque des revendications 6 à 11, **caractérisé en ce que** le brin de traction (8, 8′, 8ʺ, 8‴) peut être tendu avec au moins une manivelle (15, 15') ou avec au moins un tendeur (13) et au moins un cliquet.

13. Dispositif de protection contre un rayonnement laser selon l'une quelconque des revendications 1 à 12, **caractérisé en ce que** le châssis (5) comporte un dispositif de dépose auxiliaire pour l'élément de revêtement (1, 1′, 1ʺ, 1‴) formant la section de couverture.

14. Dispositif de protection contre un rayonnement laser selon la revendication 13, **caractérisé en ce que** le dispositif de dépose auxiliaire pour l'élément de revêtement (1, 1′, 1ʺ, 1‴) formant la section de couverture est fixé à une traverse du châssis (5).

15. Dispositif de protection contre un rayonnement laser selon l'une quelconque des revendications 1 à 14, **caractérisé en ce que** l'élément de revêtement (1, 1′, 1ʺ, 1‴) constituant la section de couverture chevauche au moins un élément de revêtement maintenu sur le châssis (5), constituant une paroi latérale (7, 7′) .
